# EUROPEAN PATENT APPLICATION

(11) **EP 2 109 319 A1**
(43) Date of publication of application: **14.10.2009**
(21) Application number: 09155988.0
(22) Date of filing: 24.03.2009
(51) Int. Cl.: H04N 7/26, H04N 7/50

(54) **Moving image encoding-decoding system with macroblock-level adaptive frame/field processing**

(30) Priority: 11.04.2008 JP 2008103873
(71) Applicant: Fujitsu Limited, Kawasaki-shi, Kanagawa 211-8588 (JP)
(72) Inventor: Kazui, Kimihiko, Kanagawa 211-8588 (JP)
(74) Representative: HOFFMANN EITLE

(57) **Abstract**

An encoding device encodes a macroblock based on a determined encoding method. When field predictive encoding is determined, the encoding device performs inter-field predictive encoding to a second field within the same frame by using, as one of reference images a macroblock of a first field within the same encoded frame. A decoding device receives an encoded moving image frame and encoding information, and determines whether each macroblock of a frame to be processed has been encoded by a frame prediction or encoded by a field prediction. The decoding device decodes a macroblock based on a determined encoding method. When field predictive encoding is determined, the decoding device performs field prediction decoding to a macroblock of a second field within the same frame by using as one of reference images a macroblock of a first field within the same decoded frame.

## Description

### FIELD

The embodiment(s) discussed herein is (are) directed to a moving image processing system including an encoding device that performs an inter-frame prediction of frames to be processed of input interlace moving images, generates encoded moving image data obtained by encoding, and transmits the generated encoded moving image data to a decoding device, and the decoding device that decodes the encoded moving image data received from the encoding device, and obtains an original interlace moving image.

### BACKGROUND

Conventionally, there has been widely used a moving image processing system including an encoding device that encodes an input moving image, and a decoding device that receives data encoded by the encoding device and decodes the received data. The amount of information of the moving image transmitted and received in this moving image processing system is very large, and it is very expensive to store the information into media and to transmit the information in a network by directly using the moving image data. Therefore, technical development and standardization to perform compressed encoding of the moving image using a reversible or nonreversible system have been widely performed conventionally. Their representative examples are MPEG-1, MPEG-2, MPEG-4, and MPEG-4 AVC/H.264 standardized by the Moving Picture Experts Group (MPEG).

These standards employ inter-frame-motion predictive encoding. In this inter-frame-motion predictive encoding, a portion having a high correlation between frames is detected, and a positional difference between the frames (motion vector) and a pixel value difference between the frames (prediction error) are encoded. Generally, a moving image has a high correlation between frames, and therefore has a smaller pixel difference value than that of an original pixel value. Consequently, high compression efficiency can be achieved.

These standards (excluding MPEG-1) employ inter-frame predictive encoding where a moving image corresponds to an interlace format. Specifically, these standards employ a dynamic selection of a frame prediction and a field prediction. In the case of the frame prediction, both a macroblock and a reference frame as processing units have a frame structure (where an eve field and an odd field alternately appear at every one line). On the other hand, in the case of the field prediction, both the macroblock and the reference frame as processing units have only a field structure (one of an odd field and an even field).

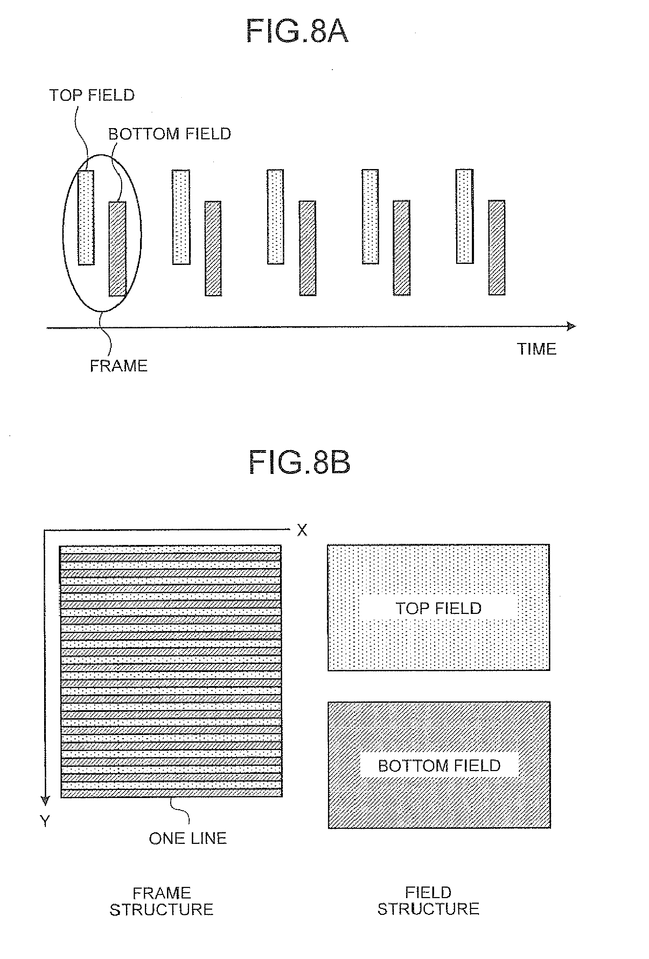

The interlace format, the frame prediction, and the field prediction are explained next. A moving image of the interlace format is that of a format for alternately drawing a field (a top field) of a set of odd lines and a field (a bottom field) of a set of even lines, as depicted in FIG. 8A. An alternate drawing of the top field and the bottom field as depicted in FIG. 8B is called a frame.

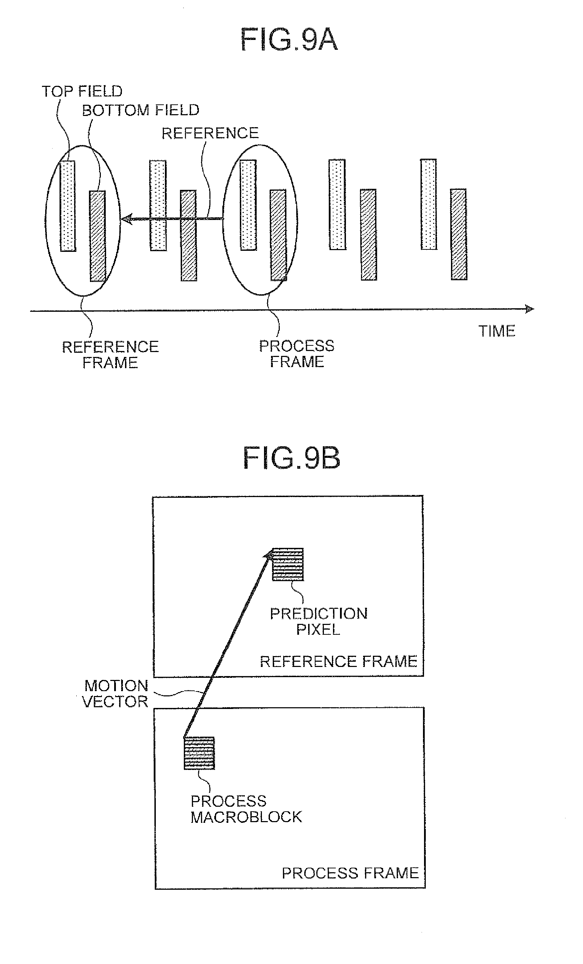

The frame prediction means encoding of a differential (error) image between a macroblock to be processed and a prediction pixel, by referencing the prediction pixel on a frame of a time (for example, two frames before) different from a frame to be processed, corresponding to the macroblock to be processed of the frame to be processed, as depicted in FIG. 9A. Specifically, as depicted in FIG. 9B, each macroblock to be processed of the frame to be processed is encoded by the differential calculated by referencing a reference frame and a motion vector for estimating a moving amount of an image.

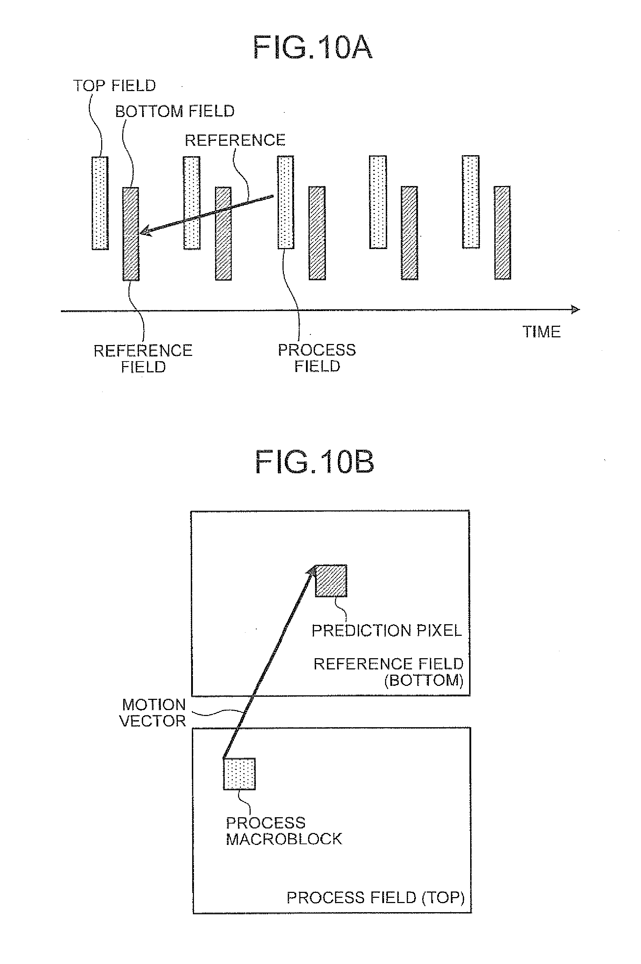

The field prediction means encoding of a differential (error) image between a macroblock to be processed and a prediction pixel, by referencing the prediction pixel on a field of a time (for example, two fields before) different from a field to be processed, corresponding to the macroblock to be processed of the field to be processed, as depicted in FIG. 10A. Specifically, as depicted in FIG. 10B, each macroblock to be processed of the field to be processed is encoded by the differential calculated by referencing a reference field and a motion vector for estimating a moving amount of an image.

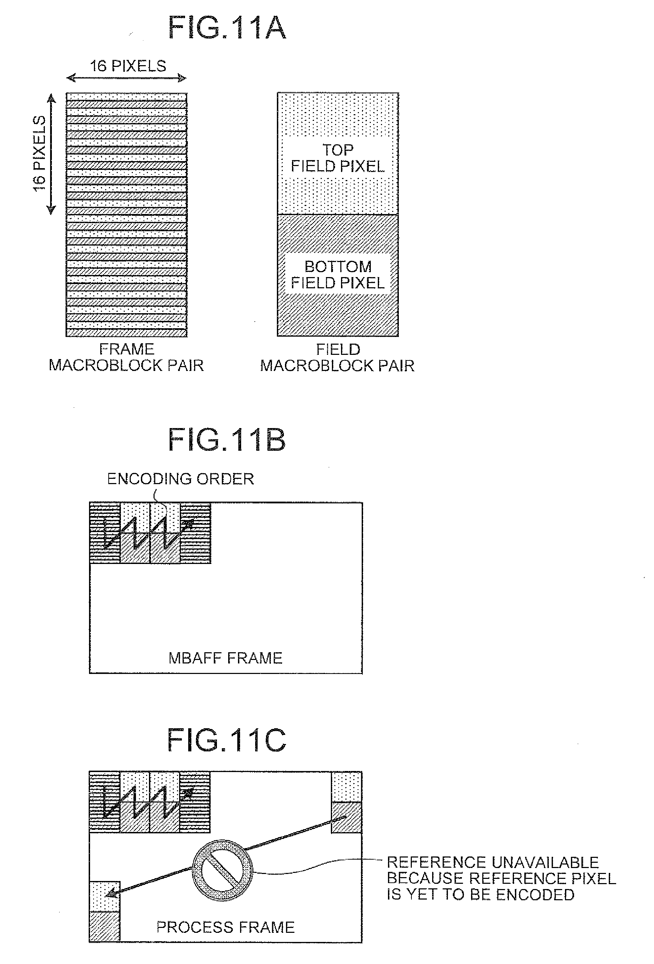

Various techniques of adaptive switching of a frame prediction and a field prediction in a macroblock unit as described above are disclosed (see Japanese Laid-open Patent Publication No. 05-91500). Recently, an encoding method called macroblock-adaptive frame-field (MBAFF) employed in MPEG-4 AVC/H.264 is often used. According to this method, as depicted in FIG. 11A, two macroblocks (called a macroblock pair) continuous in a vertical direction are set as an encoding unit within the same frame. Either two frame prediction macroblocks or two field prediction macroblocks (one top-field macroblock, and one bottom-field macroblock) are selected for each macroblock pair.

This MBAFF makes it possible to change a motion prediction system of macroblocks within a frame image to either a frame prediction or a field prediction in the macroblock unit. The frame prediction is suitable for an image near a static image, and the field prediction is suitable for encoding of an image having a large motion. In general, an image includes both a static portion and a dynamic portion. Therefore, the encoding efficiency can be improved by switching a prediction system in the macroblock unit, as depicted in FIG. 11B.

However, according to the conventional techniques described above, the efficiency of motion prediction is poor, because fields confined in the same frame cannot be predicted. Specifically, according to the motion-predictive encoding system, a reference picture needs to be encoded and locally decoded without exception before a picture to be processed, as a principle of inter-frame/inter-field predictive encoding. Further, the prediction efficiency can be improved by setting a picture of high correlation as a prediction image. This correlation is inversely proportional to a time interval between a picture to be processed and a reference picture. Therefore, it is preferable to reference a frame or a field at a near time as far as possible.

In the case of processing by the MBAFF system, a frame-prediction macroblock pair references a frame at a near time (for example a frame before or after; or a frame ahead in the encoding order), based on the above principle. Out of a field-prediction macroblock pair, a macroblock belonging to a field ahead in time similarly references a field before or after (a field ahead in the encoding order), based on the above principle. The prediction efficiency can be improved when a remaining macroblock belonging to a field later in time in the field-prediction macroblock pair can reference a field ahead in time within the same frame. However, according to the conventional MBAFF system, a processing order of the macroblock pair is from an upper left to a lower right on the screen, as depicted in FIG. 11C. A macroblock at a position ahead in the processing order within the screen cannot reference a pixel at a back position in the processing order. Therefore, the macroblock belonging to the field later in time cannot reference the field ahead in time within the same frame. As a result, the efficiency of motion prediction is poor.

### SUMMARY

It is an object of the present invention to at least partially solve the problem in the conventional technology.

According to an aspect of an embodiment, a moving image processing system includes an encoding device and a decoding device. The encoding device includes a predictive-encoding determining unit that estimates a motion vector by searching a motion of a moving image frame to be processed, and determines whether to perform frame predictive encoding or field predictive encoding to each macroblock of the frame to be processed based on the estimated motion vector, a first encoding unit that encodes a macroblock by an encoding method determined by the predictive-encoding determining unit, a second encoding unit that performs field predictive encoding to a second field within the same frame, by using as one of reference images a macroblock of a first field within the same frame encoded by the first encoding unit, when an encoding method determined by the predictive-encoding determining unit is field predictive encoding, and an encoded-data transmitting unit that transmits by adding as encoding information an encoding method of each macroblock of a moving image frame to be processed encoded by the first encoding unit and the second encoding unit. The decoding device includes an encoding determining unit that receives a moving image frame encoded by the encoding device and encoding information, and determines whether each macroblock of the frame to be processed has been encoded by a frame prediction or encoded by a field prediction, a first decoding unit that decodes an encoded macroblock by a decoding method corresponding to an encoding method determined by the encoding determining unit, and a second decoding unit that performs field prediction decoding to a macroblock of a second field within the same frame by using as one of reference images a macroblock of a first field within the same frame decoded by the first decoding unit, when the encoding method determined by the encoding determining unit is field predictive encoding.

Additional objects and advantages of the invention (embodiment) will be set forth in part in the description which follows, and in part will be obvious from the description, or may be learned by practice of the invention. The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWING(S)

FIG. 1A is a schematic diagram for explaining characteristics of a moving image processing system according to an embodiment;
FIG. 1B is a schematic diagram for explaining characteristics of the moving image processing system according to the embodiment;
FIG. 2 is a block diagram of a configuration of an encoding device in the moving image processing system according to the embodiment;
FIG. 3 is an example of encoded moving image data generated by the encoding device;
FIG. 4 is a block diagram of a configuration of a decoding device in the moving image processing system according to the embodiment;
FIG. 5 is a flowchart of a frame process in the moving image processing system according to the embodiment;
FIG. 6 is a flowchart of a macroblock-processing-order determining process in the moving image processing system according to the embodiment;
FIG. 7A is an example of a computer system that executes an encoding program;
FIG. 7B is an example of a computer system that executes a decoding program;
FIG. 8A is a schematic diagram for explaining a frame structure and a field structure according to a conventional technique;
FIG. 8B is another schematic diagram for explaining a frame structure and a field structure according to the conventional technique;
FIG. 9A is a schematic diagram for explaining a frame prediction according to the conventional technique;
FIG. 9B is another schematic diagram for explaining a frame prediction according to the conventional technique;
FIG. 10A is a schematic diagram for explaining a field prediction according to the conventional technique;
FIG. 10B is another schematic diagram for explaining a field prediction according to the conventional technique;
FIG. 11A is a schematic diagram for explaining MBAFF;
FIG. 11B is another schematic diagram for explaining the MBAFF; and
FIG. 11C is still another schematic diagram for explaining the MBAFF.

### DESCRIPTION OF EMBODIMENT(S)

Exemplary embodiments of a moving image processing system, an encoding device, an encoding method, an encoding program, a decoding device, a decoding method, and a decoding program according to the present invention will be explained below in detail with reference to the accompanying drawings. An outline and characteristics of a moving image processing system according to a first embodiment of the present invention, and a configuration and a processing flow of the moving image processing system are sequentially explained below. Various modifications of the first embodiment are explained last.

In the first embodiment, explanations are made based on an assumption that a top field is ahead in time, and a bottom field is later in time within a frame. When the bottom field is ahead in time, the top field and the bottom field can be read by replacing each other. In MPEG-2, a motion prediction system can be also switched between a frame prediction and a field prediction in the macroblock unit. However, unlike MPEG-2, MBAFF of MPEG-4 AVC/H.264 improves the encoding efficiency, by setting a prediction unit at a field prediction time to a macroblock size (16×16), by performing a process using two macroblock units called the macroblock pair adjacent vertically within a frame. On the other hand, MPEG-2 uses a size of 16x8.

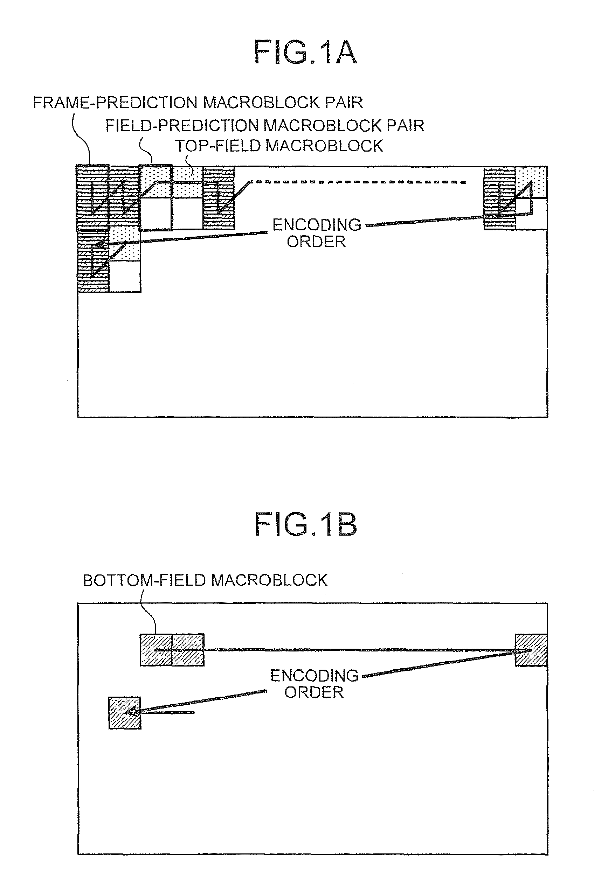

The outline and characteristics of the moving image processing system according to the first embodiment are explained first with reference to FIGS. 1A and 1B. FIGS. 1A and 1B are schematic diagrams for explaining the moving image processing system.

In the first embodiment, explanations are made of a moving image processing system in which an encoding device that transmits a bit stream having an input encoded moving image and a decoding device that decodes the bit stream received from the encoding device are connected to each other so that these devices can communicate with each other through a network.

As described above, this moving image processing system has an outline operation of transmitting a bit stream having an input encoded moving image, and decoding the bit stream by receiving it from the encoding device. Particularly, this moving image processing system has a main characteristic of improving image quality at the time of encoding an inter-field moving image.

Specifically, as depicted in FIG. 1A, at the time of encoding a macroblock pair as two macroblock units adjacent vertically within a frame from an upper left to a lower right direction, a frame-prediction macroblock pair representing a macroblock pair to be encoded by a frame prediction is encoded in a normal manner, and a field-prediction macroblock pair representing a macroblock pair to be encoded by a field prediction is encoded such that only a top-field macroblock is encoded first. After the encoding is once performed from the upper left to the lower right direction of a screen within one frame, a top-field macroblock to which each bottom-field macroblock corresponds is encoded as one of reference images, for the remaining bottom-field macroblock of the field-prediction macroblock, as depicted in FIG. 1B.

Thereafter, the decoding device receives the bit stream encoded as described above, and first decodes each of the frame-prediction macroblock and the top-field macroblock of the field-prediction macroblock, from the upper left to the lower right direction of the screen in one frame, in a similar manner to that of the encoding processing method. Thereafter, for the remaining bottom-field macroblock of the field-prediction macroblock, the decoding device decodes the top-field macroblock to which each bottom-field macroblock corresponds, as one of reference images.

By performing the above process, a macroblock at a position ahead in the processing order within the screen can reference a pixel at a back position in the processing order. That is, a field prediction can be performed by regarding a field ahead in time within the same frame as a reference field, thereby improving the efficiency of motion prediction. As a result, the moving image processing system according to the first embodiment can improve image quality at the time of encoding the inter-field moving image.

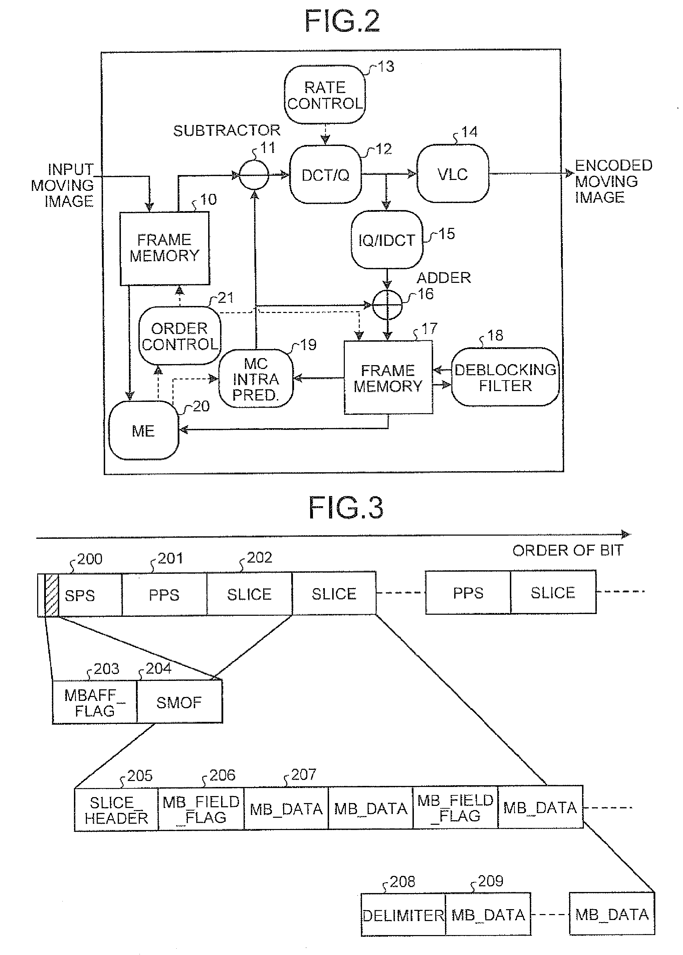

A configuration of the moving image processing system depicted in FIGS. 1A and 1B is explained next with reference to FIGS. 2 to 4. This moving image processing system includes an encoding device and a decoding device, and the configuration of each device is explained in detail.

First, a configuration of the encoding device in the moving image processing system is explained with reference to FIG. 2. FIG. 2 is a block diagram of a configuration of the encoding device in the moving image processing system according to the first embodiment.

This encoding device includes a frame memory 10, a subtracted 11, a DCT/Q 12, a rate control 13, a VLC 14, an IQ/IOCT 15, an adder 16, a frame memory 17, a deblocking filter 18, an MC intra Pred. 19, an ME 20, and order control 21.

The frame memory 10 once stores an input moving image. For example, the frame memory 10 temporarily stores each one frame of a moving image input from an external network and an external device (for example, a storage device such as a compact disk (CD) or a hard disk drive (HDD).

The subtractor 11 calculates a difference between a macroblock to be encoded in an input moving image and a prediction image, and generates a prediction error image. Specifically, the subtracter 11 is connected to the frame memory 10, the MC intra Pred. 19, and the DCT/Q 12, respectively. The subtractor 11 generates a prediction error image by calculating a difference between a prediction image and a macroblock to be encoded in an input moving image as one frame stored in the frame memory 10 generated by the MC intra Pred. 19 (described later). The subtractor 11 outputs the generated prediction error image to the DCT/Q12.

The DCT/Q 12 performs a discrete cosine transform (DCT) calculation and a quantization to a prediction error image. Specifically, the DCT/Q 12 is connected to the rate control 13, the VLC 14, and the IQ/IDCT 15, respectively. The DCT/Q 12 performs a DCT calculation and a quantization with respect to the prediction error image input from the subtractor 11 by a quantization value input from the rate control 13 (described later), and outputs a calculation result to the VLC 14 and the IQ/IDCT 15, respectively.

The rate control 13 is a rate control unit, and specifically, it determines the number of bits after encoding, and a quantization value for controlling image quality, to be used for the quantization performed by the DCT/Q 12, from an input moving image as one frame stored in the frame memory 10. The Rate Control 13 outputs a determined quantization value to the DCT/Q 12.

The VLC 14 is a variable-length encoding unit. Specifically, the VLC 14 performs reversible encoding such as a run/level conversion to a prediction error image that is performed with a DCT calculation and a quantization, and generates an encoded moving image. For example, the VLC 14 performs reversible encoding such as a run/level conversion to a prediction error image that is performed with a DCT calculation and a quantization by the DCT/Q 12, and generates encoded moving image data. The VLC 14 transmits the generated encoded moving image data to the decoding device as a bit stream, as depicted in FIG. 3. FIG. 3 is an example of encoded moving image data generated by the encoding device.

The encoded moving image data depicted in FIG. 3 is explained below. In FIG. 3, reference numeral 200 denotes a sequence parameter set (SPS) which describes a parameter common to plural pictures (sequence) such as a screen size and a picture type (such as a frame, a field, and an MBAFF). Reference numeral 201 denotes a picture parameter set (PPS) which describes an encoding mode for each picture such as an entropy encoding mode. Reference numeral 202 denotes a slice. One picture (a frame or a field) includes one or plural fields. Reference numeral 203 denotes an MBAFF flag which describes whether to encode a frame within this sequence if the MBAFF mode. In MPEG-4 AVC/H.264, this MBAFF flag corresponds to mb_adaptive_frame_field_flag. Reference numeral 204 denotes a separate MB order flag (SMOF) which describes whether to perform inter-field referencing within the same frame in the MBAFF mode. When it describes that the inter-field referencing is not performed, this means that the same MBAFF encoding as that of MPEG-4 AVC/H.264 is performed.

Reference numeral 205 denotes a slice header that describes a reference frame list and the like. Reference numeral 206 denotes a flag which identifies whether a macroblock pair has been encoded by a frame mode or encoded by a field mode. In MPEG-4 AVC/H.264, this flag corresponds to mb_field_decoding_flag. Reference numeral 207 denotes data of a macroblock of a frame macroblock pair, or data of a top-field macroblock of a field macroblock pair. This data describes an encoding mode (intra/inter), a reference frame identifier, a motion vector, a quantization coefficient, a quantization DCT coefficient or the like. Reference numeral 208 denotes a flag that indicates a boundary between a "former half" process part and a "latter half" process part, which will be explained by a flow described below. Reference numeral 209 denotes data of a bottom-field macroblock of a field macroblock pair, and this data describes an encoding mode (intra/inter), a reference frame identifier, a motion vector, a quantization coefficient, a quantization DCT coefficient or the like.

Referring back to FIG. 2, the IQ/IDCT 15 is an inverse quantizing unit/an inverse discrete cosine transform (IDCT) unit connected to the DCT/Q 12 and the adder 16. The IQ/IDCT 15 performs an inverse quantization and an IDCT calculation to a prediction error image that is performed with a DCT calculation and a quantization. The adder 16 is connected to the IQ/IDCT 15 and the frame memory 17, adds an intra prediction image or an inter prediction image input by the MC intra Pred. 19 described later to a prediction error image performed with an inverse quantization and an IDCT calculation, generates a local decoded image, and stores the generated local decoded image into the frame memory 17.

The frame memory 17 is a frame memory that stores a local decoded image. Specifically, the frame memory 17 is connected to the adder 16, the deblocking filter 18, the MC intra Pred. 19, and the ME 20. The frame memory 17 receives a local decoded image generated and input by the adder 16, and stores this received local decoded image.

The deblocking filter 18 is a deblocking filter that removes a block distortion in the local decoded image stored in the frame memory 17, by applying a lowpass filter (a deblocking filter) to a macroblock boundary of the local decoded image.

The MC intra Pred. 19 generates a prediction image from a local decoded image stored in the frame memory 17. Specifically, the MC intra Pred. 19 is connected to the subtractor 11, the frame memory 17, and the ME 20. At the time of intra encoding a macroblock, the MC intra Pred. 19 generates an intra prediction image from a pixel already encoded and locally decoded within the same frame accumulated in the frame memory 17. At the time of inter encoding a macroblock, the MC intra Pred. 19 generates an inter prediction image from a reference frame/field accumulated in the frame memory 17, and from a motion vector estimated and input by the ME 20.

The ME 20 estimates a motion vector. Specifically, the ME 20 is connected to the frame memory 10, the frame memory 17, the MC intra Pred. 19, and the order control 21. The ME 20 performs a motion vector estimation between a frame or a field to be processed and accumulated in the frame memory 10, and a frame or a field encoded and locally decoded and accumulated in the frame memory 17, and calculates a motion vector. The ME 20 then outputs the calculated motion vector to the MC intra Pred. 19 and the order control 21.

The order control 21 determines a macroblock processing order, and specifically it is connected to the frame memory 17 and the ME 20. The order control 21 determines whether each macroblock pair is to be prediction encoded using a frame or a field, based on a result of a motion vector estimation performed by the ME 20. The order control 21 also determines a processing order and a macroblock address in an image. The order control 21 notifies a macroblock address of the macroblock in each processing order to the frame memory 10 and the frame memory 17. A detailed process of the order control 21 is explained based on a processing flow.

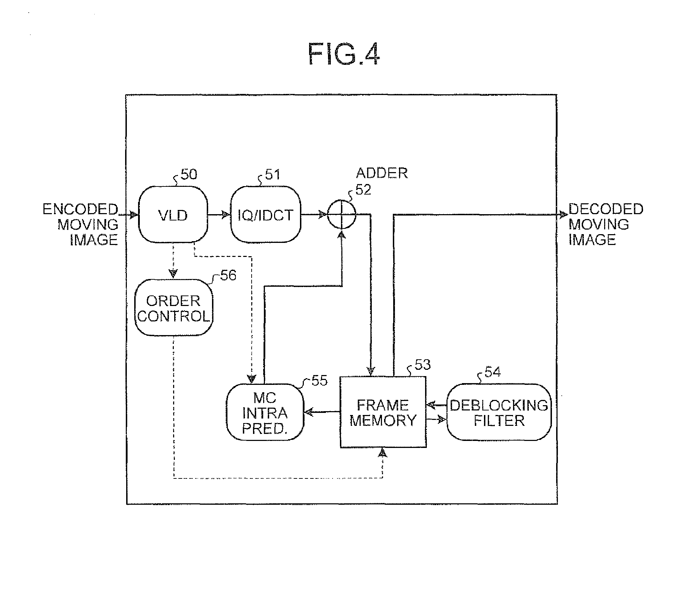

A configuration of the decoding device in the moving image processing system is explained next with reference to FIG. 4. FIG. 4 is a block diagram of the configuration of the decoding device in the moving image processing system according to the first embodiment.

This decoding device includes a VLD 50, an IQ/IDCT 51, an adder 52, a frame memory 53, a deblocking filter 54, an MC intra Pred. 55, and order control 56. The VLD 50 is connected to the IQ/IDCT 51, the MC intra Pred. 55, and the order control 56. The decoding device is a variable-length decoding unit that performs reversible decoding such as a run/level conversion to an encoded moving image (see FIG. 3) received from the encoding device, and generates a prediction error image which is performed with a DCT calculation and a quantization. The VLD 50 obtains a type (a frame or a field) of each macroblock pair from an encoded moving image.

The IQ/IDCT 51 is an inverse quantizing unit/an IDCT (inverse discrete cosine transform) unit connected to the VLD 50 and the adder 52. Specifically, the IQ/IDCT 51 performs inverse quantization and an IDCT calculation to a prediction error image that is performed with a DCT calculation and a quantization generated and input by the VLD 50. The adder 52 is connected to the frame memory 53 and the MC intra Pred. 55. The adder 52 generates a decoded image by adding an intra prediction image or an inter prediction image input by the MC intra Pred. 55 described later, to a prediction error image that is performed with inverse quantization and an IDCT calculation generated and input by the VLD 50. The adder 52 stores the generated decoded image into the frame memory 53.

The frame memory 53 is a frame memory that stores a generated decoded image. Specifically, the frame memory 53 is connected to the adder 52, the deblocking filter 54, the MC intra Pred. 55, and the order control 56. The frame memory 53 receives and stores a decoded image generated and input by the adder 52. The deblocking filter 54 is a deblocking filter that removes a block distortion in the decoded image stored in the frame memory 53, by applying a lowpass filter (a deblocking filter) to a macroblock boundary of the decoded image.

The MC intra Pred. 55 generates a prediction image from the decoded image stored in the frame memory 53. Specifically, the MC intra Pred. 55 is connected to the VLD 50, the adder 52, and the frame memory 53. At the time of intra decoding a macroblock, the MC intra Pred. 55 generates an intra prediction image from a pixel already decoded within the same frame accumulated in the frame memory 53. At the time of inter decoding a macroblock, the MC intra Pred. 55 generates an inter prediction image from a reference frame/field accumulated in the frame memory 53, and from a motion vector decoded by the VLD 50. The MC intra Pred. 55 outputs the generated intra prediction image or inter prediction image to the adder 52.

The order control 56 determines a macroblock processing order, and specifically it is connected to the VLD 50 and the frame memory 53. The order control 56 determines a processing order and a macroblock address in an image from a type of a macroblock pair decoded by the VLD 50. The order control 56 notifies a macroblock address of the macroblock in each processing order to the frame memory 53.

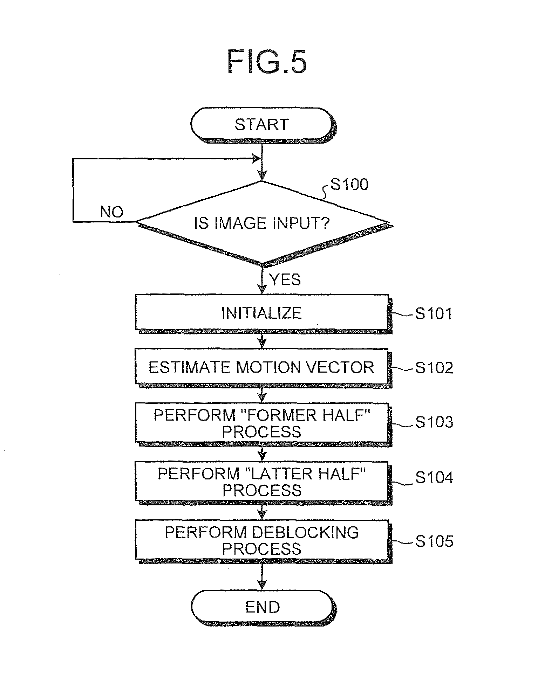

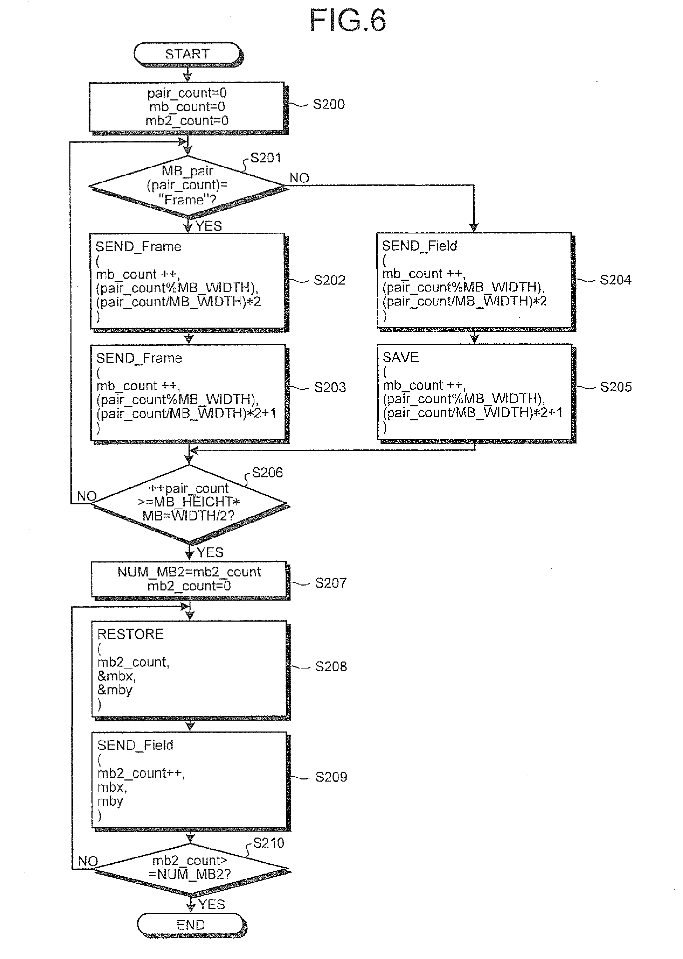

A process performed by the moving image processing system is explained next witch reference to FIGS. 5 and 6. A frame process of the moving image processing system and a macroblock-processing-order determining process according to the first embodiment are explained below. The encoding device and the decoding device are basically different in only as to whether to perform encoding or decoding, and their general processing flows are the same. Therefore, the encoding device is explained here.

A flow of a frame process in the moving image processing system is explained with reference to FIG. 5. FIG. 5 is a flowchart of a frame process in the moving image processing system according to the first embodiment.

As depicted in FIG. 5, when an image is input (Yes at Step S100), the encoding device performs initialization to generate a list of a reference frame/field (Step S101).

The encoding device estimates a motion vector between a process frame and a reference frame/field (Step S102). Specifically, the encoding device determines whether to perform frame predictive encoding or field predictive encoding to a macroblock pair.

The encoding device performs a "former half" process of encoding all frame macroblock pairs and all top-field macroblocks (Step S103). Specifically, the encoding device writes a variable-length encoded image and a local decoded image generated by encoding all frame macroblock pairs and all top-field macroblocks, into the frame memory 17.

The encoding device generates an encoded moving image by performing an encoding process ("latter half" process) using, as one of reference images, a top-field macroblock corresponding to each bottom-field macroblock, for all remaining bottom-field macroblocks (Step S104). Thereafter, the encoding device performs a deblocking filter process to the generated encoded moving image, using a deblocking filter as a lowpass filter applied to a boundary of the macroblock (Step S105), and transmits the processed encoded moving image to the decoding device. In H.264, an image used for a prediction between a frame and a field is an image after a deblocking filter is applied to this image. However, in the first embodiment, an image used for a prediction between a frame and a field is an image before a deblocking filter is applied to this image, only at the time of referencing from a bottom field within the same frame to a top field.

The decoding processing in the decoding device is briefly explained below. The decoding device does not perform the process at Step S102 in FIG. 5. Specifically, upon receiving encoded moving image data, the decoding device extracts information of a frame prediction and a field prediction from an encoded moving image, at Step S101. At Step S103, the decoding device performs a decoding process of all frame macroblock pairs and all top-field macroblocks. At Step S104, the decoding device writes the decoded image into the frame memory 53. Thereafter, the decoding device performs a deblocking filter process using a deblocking filter. The decoding device performs the process of the deblocking filter, after completing the encoding and decoding of the whole frame, after finishing the encoding and decoding of the "former half" and the "latter half".

A flow of the macroblock-processing-order determining process in the moving image processing system is explained with reference to FIG. 6. FIG. 6 is a flowchart of the macroblock-processing-order determining process in the moving image processing system according to the first embodiment. A process at Steps S201 to S206 is performed in the "former half" of the frame encoding or decoding process. A process at Steps S206 to S210 is performed in the "latter half" of the frame encoding or decoding process. A method of determining whether each macroblock is encoded by a frame prediction or by a field prediction is described later, and therefore detailed explanations thereof will be omitted here.

As depicted in FIG. 6, the encoding device ("decoding device" in the case of a decoding process, and this is hereinafter similarly applied) initializes pair_count, mb_count, mb2_count (Step S200). Specifically, pair_count, mb_count, mb2_count represent a cumulative number of process macroblocks, a cumulative number of encoded (or decoded) macroblocks, and a cumulative number of macroblocks to be encoded in the "latter half" by pending the process, respectively.

The encoding device performs a branch process of determining whether a pair_count-th macroblock pair is a frame prediction or a field prediction (Step S201). MB_pair(num) represents a prediction type of an num-th macroblock pair.

When the pair_count-th macroblock pair is a frame prediction (YES at Step S201), the encoding device generates information to be used to process an upper macroblock (Step S202), and generates information to be used to process a lower macroblock (Step S203). SEND_Frame (num, x, y) represents to notify to the frame memory 10 and the frame memory 17 (the frame memory 53 for the decode processing) that an address within a screen of the num-th frame prediction macroblock is (x, y). MB_WIDTH represents the number of macroblocks in a lateral direction within a frame.

Thereafter, when the pair_count-th macroblock pair is a field prediction (No at Step S201), the encoding device generates information which becomes necessary to process the top-field macroblock (Step S204). SEND_Field(num, x, y) means to notify to the frame memory 10 and the frame memory 17 (the frame memory 53 for the decode processing) that an address within a screen of the num-th field prediction macroblock is (x, y).

The encoding device generates information which becomes necessary to process the bottom-field macroblock (Step S205). At Step S205, this information is generated at the time of processing the top-field macroblock pair when the pair_count-th macroblock pair is a field prediction. SAVE(num x, y) means to store an address within a screen of a num-th field-prediction bottom macroblock (x, y), into a memory region within the order control 21 (the order control 56 for the decode processing).

Thereafter, the encoding device determines whether there is still a macroblock to which a process is to be performed in the "former half" of frame encoding (or decoding) (Step S206). ME_HEIGHT represents the number of blocks in a vertical direction within a frame.

When there is not yet a macroblock to which a process is to be performed in the "former half" (Yes at Step S206), the encoding device performs initialization prior to the "latter half" of the frame encoding (or decoding) (Step S207). NUM_MB2 represents a total number of bottom-field macroblocks to which a process is suspended in the "former half" and encoding (or decoding) is performed in the "latter half".

The encoding device obtains address information of a bottom-field macroblock to which encoding (or decoding) is performed at the mb2_count-th of the "latter half" (Step S208). RESTORE(num, &x, &y) in this process means to enquire a memory region within the order control 21 (the order control 56 for the decode process) for an address within a screen of the num-th field-prediction bottom-field macroblock, and store a result of the enquiry for (&x, &y).

Thereafter, the encoding device informs address information of the bottom-field macroblock which is encoded (or decoded) at the mb2_count-th time (Step S209), and determines whether there is still a bottom-field macroblock to which a process is to be performed in the "latter half" of frame encoding (or decoding) (Step S210). When there is no bottom-field macroblock to which a process is to be performed in the "latter half", the process is finished.

According to MPEG-4 AVC/H.264, a frame and a field used for a motion prediction can be selected in a macroblock unit from among plural frame fields. A list of frames and fields that can be selected in a slice unit is called a reference frame list. Selection information in a macroblock unit is called a reference frame identifier.

When SMOF is off, a reference frame list of MPEG-4 AVC/H.264 itself (RefPicList0[], RefPicList1[]) is used. On the other hand, when SMOF is on, at the "former half" processing time, RefPicList0[] and RefPicList1[] themselves are reference-frame listed. At the "latter-half" processing time, RefPicList0[] as a forward-reference frame list is updated. Specifically, a reference value to a reference frame is input to a first entry. An original list is shifted one by one to the succeeding entries.

In the bottom-field macroblock, a reference field can be set as a top field within the same frame, by setting a forward reference index to "0". When the forward reference index is set to other than "0", a field within other frame can be referenced.

Field and frame determination of determining whether a macroblock pair is to be encoded by a field prediction or encoded by a frame prediction is explained. In the present example, a process frame is a B picture (referencing both directions). In the case of a P picture (referencing a forward direction), a backward motion vector is excluded.

In this state, a motion vector of a process frame is estimated in the process at Steps S101 and S102. At this time, the following values are calculated in each macroblock pair. For a method of selecting a frame and a field to be referenced from among plural referable frames and fields, and for a method of estimating an optimum motion vector from among reference frames and fields and process frames, generally utilized known methods are applied.

The following values are calculated: forward-reference frame indexes (refIdxL0_Frame_Upper, refIdxL0_Frame_Lower) of upper and lower macroblocks at a frame prediction time; backward-reference frame indexes (refIdxL1_Frame_Upper, refIdxL1_Frame_Lower) of upper and lower macroblocks at a frame prediction time; forward motion vectors (mvL0_Frame_Upper, mvL0_Frame_Lower) of upper and lower macroblocks at a frame prediction time; backward motion vectors (mvL1_Frame_Upper, mvL1_Frame_Lower) of upper and lower macroblocks at a frame prediction time; motion prediction errors (total sum of differential absolute values) (cost_Frame_Upper, cost_Frame_Lower) of upper and lower macroblocks at a frame prediction time; forward-reference frame indexes (refIdxL0_Field_Top, refidxL0_Field_Bottom) of top-field and bottom-field macroblocks at a field prediction time; backward-reference frame indexes (refIdxL1_Field_Top, refIdxL1_Field_Bottom) of top-field and bottom-field macroblocks at a field prediction time; forward motion vectors (mvL0_Field_Top, mvL0_Field_Bottom) of top-field and bottom-field macroblocks at a field prediction time; backward motion vectors (mvL1_Field_Top, mvL1_Field_Bottom) of top-field and bottom-field macroblocks at a field prediction time; and a motion prediction error (total sum of differential absolute values) (cost Field_Top, cost_Field_Bottom) of top-field and bottom-field macroblocks at a field prediction time.

When a condition of "(cost_Frame_Upper + cost_frame_Lower) <= (cost_Field_Top + cost_Field_Bottom)" is satisfied, a process macroblock pair is set in a frame structure. Otherwise, the process macroblock pair is set in a field structure.

As explained above, according to the first embodiment, the encoding device estimates a motion vector of a moving image frame to be processed, by searching a motion. Based on an estimated motion vector, the encoding device determines whether to perform frame predictive encoding or field predictive encoding to each macroblock of the frame to be processed. The encoding device encodes each macroblock by a determined encoding method. When a determined encoding method is field predictive encoding, the encoding device performs inter-field predictive encoding to a second field within the same frame, using a macroblock of a first field within the same encoded frame as one of reference images. The encoding device adds as encoding information the encoding method of each macroblock in the encoded moving image frame to be processed, and transmits the added information. The decoding device receives the encoded moving image frame encoded by the encoding device and the encoding information, and determines whether each macroblock of the frame to be processed has been encoded by a frame prediction or encoded by a field prediction. The decoding device decodes the encoded macroblock by a decoding method corresponding to the determined encoding method. When the determined encoding method is field predictive encoding, the decoding device performs field-prediction decoding to a macroblock of the second field within the same frame, using the macroblock of the first field within the same decoded frame as one of reference images. Therefore, a macroblock at a position ahead in the processing order within the screen can reference a pixel at a position last in the processing order. That is, it is possible to perform a field prediction using a field ahead in time within the same frame as a reference field, thereby improving the efficiency of a motion prediction. As a result, image quality at the time of performing inter-field moving image encoding can be improved.

While the first embodiment of the present invention is explained above, the present invention can be also carried out by various different embodiments other than the first embodiment. Another embodiment of the present invention is explained below based on the following three classifications: encoding method; system configuration or the like; and programs.

First, the encoding method will be explained. In the above embodiment, it is explained that a top field is ahead in time and that a bottom field is later in time within a frame. However, the present invention is not limited to this. When the bottom field is ahead in time, the top field and the bottom field are read interchangeably.

Next, the system configuration or the like will be explained. The respective constituent elements of the respective devices depicted in the drawings are functionally conceptual, and physically the same configuration is not always necessary. That is, the specific mode of dispersion and integration of the devices are not limited to the depicted ones, and all or a part thereof can be functionally or physically dispersed or integrated in an arbitrary unit, according to various kinds of load and the status of use. In addition, all or an arbitrary part of various processing functions performed by the respective devices can be realized by a central processing unit (CPU) or a program analyzed and executed by the CPU, or can be realized as hardware by a wired logic.

Among the respective processing explained in the embodiments, all or a part of the processing explained as being performed automatically (such as an image inputting process) can be performed manually. The information including the process procedures, control procedures, specific names, and various kinds of data and parameters depicted in the specification or in the drawings can be arbitrarily changed, unless otherwise specified.

Further, the programs will be explained. Various types of processes explained in the first embodiment can be performed by executing a program prepared beforehand, using a personal computer and a computer system such as a workstation. A computer system that executes programs having functions similar to those of the first embodiment is explained below as another embodiment.

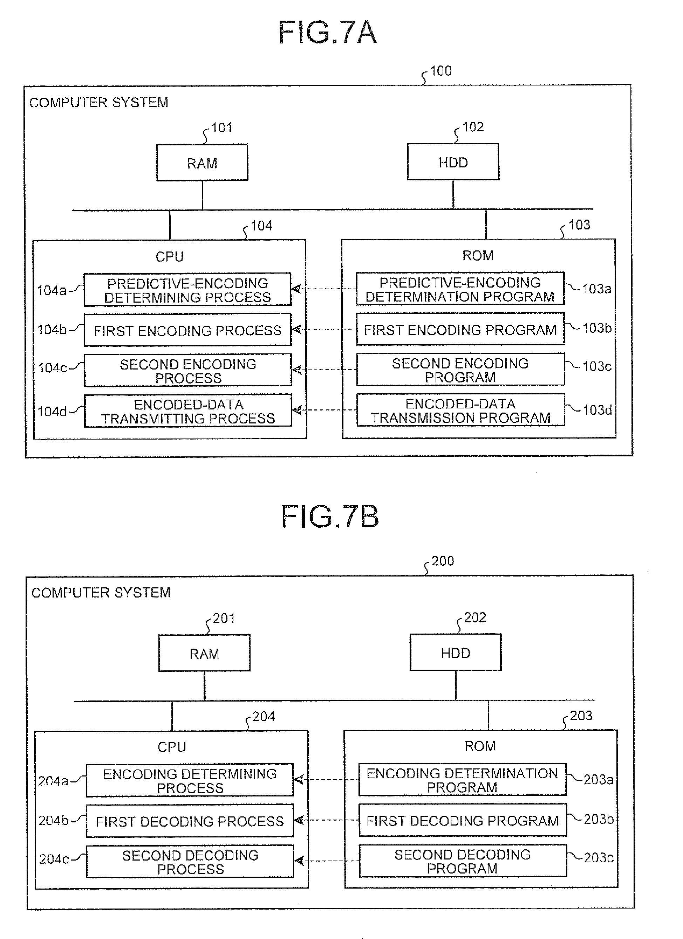

An example of a computer system that executes an encoding program is explained first. FIG. 7A is the example of a computer system that executes an encoding program. As depicted in FIG. 7A, a computer system 100 includes a random access memory (RAM) 101, a hard disk drive (HDD) 102, a read only memory (ROM) 103, and a CPU 104. The ROM 103 stores in advance programs that exhibit similar functions to those of the first embodiment. That is, as depicted in FIG. 7A, the ROM 103 stores in advance a predictive-encoding determination program 103a, a first encoding program 103b, a second encoding program 103c, and an encoded-data transmission program 103d.

The CPU 104 reads these programs 103a to 103c, and executes these programs so that the programs become a predictive-encoding determining process 104a, a first encoding process 104b, a second encoding process 104c, and an encoded-data transmitting process 104d, as depicted in FIG. 7A. The predictive-encoding determining process 104a corresponds to the Order Control 21 depicted in FIG. 2. Similarly, the first encoding process 104b, the second encoding process 104c, and the encoded-data transmission program 103d correspond to the VLC 14. The HDD 102 stores an input moving image and a local decoded image.

The above programs 103a to 103d are not necessarily required to be stored in the ROM 103. These programs can be stored in advance into "portable physical media" such as a flexible disk (FD), a compact disk ROM (CD-ROM), a magnetic optical (MO) disk, a digital versatile disk (DVD), an optical magnetic disk, or an integrated circuit (IC) card, which is inserted into the computer system 100, "fixed physical media" such as an HDD provided inside or outside the computer system 100, and "other computer systems" connected to the computer system 100 via a public line, the Internet, a local area network (LAN), and a wide area network (WAN). The computer system 100 can read these programs from these media or the system and execute them.

An example of a computer system that executes a decoding program is explained next. FIG. 7B is the example of a computer system that executes a decoding program. As depicted in FIG. 7B, a computer system 200 includes a RAM 201, an HDD 202, a ROM 203, and a CPU 204. The ROM 203 stores in advance programs that exhibit similar functions to those of the first embodiment. That is, as depicted in FIG. 7B, the ROM 203 stores in advance an encoding determination program 203a, a first decoding program 203b, and a second decoding program 203c.

The CPU 204 reads the programs 203a to 203d, and executes these programs so that the programs become an encoding determining process 204a, a first decoding process 204b, and a second decoding process 204c, as depicted in FIG. 7B. The encoding determining process 204a corresponds to the order control 56 depicted in FIG. 4. Similarly, the first decoding process 204b and the second decoding process 204c correspond to the IQ/IDCT 51 and the adder 52 depicted in FIG. 4. The HDD 202 stores a generated decoded image and the like.

The above programs 203a to 203d are not necessarily required to be stored in the ROM 203. These programs can be stored in advance into a "portable physical media" such as an FD, a CD-ROM, an MO disk, a DVD, an optical magnetic disk, or an IC card, which is inserted into the computer system 200, a "fixed physical media" such as a HDD provided inside or outside the computer system 200, and "other computer systems" connected to the computer system 200 via a public line, the Internet, a LAN, and a WAN. The computer system 200 can read these programs from these media or the system and execute them.

According to the present invention, the efficiency of motion prediction can be improved.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A moving image processing system comprising an encoding device and a decoding device:
the encoding device comprising
a predictive-encoding determining unit that estimates a motion vector by searching a motion of a moving image frame to be processed, and determines whether to perform frame predictive encoding or field predictive encoding to each macroblock of the frame to be processed based on the estimated motion vector,
a first encoding unit that encodes a macroblock by an encoding method determined by the predictive-encoding determining unit,
a second encoding unit that performs field predictive encoding to a second field within the same frame, by using as one of reference images a macroblock of a first field within the same frame encoded by the first encoding unit, when an encoding method determined by the predictive-encoding determining unit is field predictive encoding, and
an encoded-data transmitting unit that transmits by adding as encoding information an encoding method of each macroblock of a moving image frame to be processed encoded by the first encoding unit and the second encoding unit; and
the decoding device comprising
an encoding determining unit that receives a moving image frame encoded by the encoding device and encoding information, and determines whether each macroblock of the frame to be processed has been encoded by a frame prediction or encoded by a field prediction,
a first decoding unit that decodes an encoded macroblock by a decoding method corresponding to an encoding method determined by the encoding determining unit, and
a second decoding unit that performs field prediction decoding to a macroblock of a second field within the same frame by using as one of reference images a macroblock of a first field within the same frame decoded by the first decoding unit, when the encoding method determined by the encoding determining unit is field predictive encoding.

2. An encoding device comprising:
a predictive-encoding determining unit that estimates a motion vector by searching a motion of a moving image frame to be processed, and determines whether to perform frame predictive encoding or field predictive encoding to each macroblock of the frame to be processed based on the estimated motion vector;
a first encoding unit that encodes a macroblock by an encoding method determined by the predictive-encoding determining unit;
a second encoding unit that performs field predictive encoding to a second field within the same frame, by using as one of reference images a macroblock of a first field within the same frame encoded by the first encoding unit, when an encoding method determined by the predictive-encoding determining unit is field predictive encoding; and
an encoded-data transmitting unit that transmits by adding as encoding information an encoding method of each macroblock of a moving image frame to be processed encoded by the first encoding unit and the second encoding unit.

3. A decoding device comprising:
an encoding determining unit that receives an encoded moving image frame and encoding information representing an encoding method, and determines whether each macroblock of the frame to be processed has been encoded by a frame prediction or encoded by a field prediction;
a first decoding unit that decodes an encoded macroblock by a decoding method corresponding to an encoding method determined by the encoding determining unit; and
a second decoding unit that performs field prediction decoding to a macroblock of a second field within the same frame by using as one of reference images a macroblock of a first field within the same frame decoded by the first decoding unit, when the encoding method determined by the encoding determining unit is field predictive encoding.

4. An encoding method comprising:
estimating a motion vector by searching a motion of a moving image frame to be processed (S102);
determining whether to perform frame predictive encoding or field predictive encoding to each macroblock of the frame to be processed based on the estimated motion vector;
encoding a macroblock by an encoding method determined by determining (S103);
performing field predictive encoding to a second field within the same frame, by using as one of reference images a macroblock of a first field within the same encoded frame, when an encoding method determined by determining is field predictive encoding (S104); and
transmitting by adding as encoding information an encoding method of each macroblock of an encoded moving image frame to be processed (S105).

5. A computer readable storage medium (103) containing instructions that, when executed by a computer (104), causes the computer (104) to perform:
estimating a motion vector by searching a motion of a moving image frame to be processed;
determining whether to perform frame predictive encoding or field predictive encoding to each macroblock of the frame to be processed based on the estimated motion vector;
encoding a macroblock by an encoding method determined by determining;
performing field predictive encoding to a second field within the same frame, by using as one of reference images a macroblock of a first field within the same encoded frame, when an encoding method determined by determining is field predictive encoding; and
transmitting by adding as encoding information an encoding method of each macroblock of an encoded moving image frame to be processed.

6. A decoding method comprising:
receiving an encoded moving image frame and encoding information representing an encoding method;
determining whether each macroblock of the frame to be processed has been encoded by a frame prediction or encoded by a field prediction;
decoding an encoded macroblock by a decoding method corresponding to an encoding method determined by determining; and
performing field prediction decoding to a macroblock of a second field within the same frame by using as one of reference images a macroblock of a first field within the same decoded frame, when the encoding method determined by determining is field predictive encoding.

7. A computer readable storage medium (203) containing instructions that, when executed by a computer (204), causes the computer (204) to perform:
receiving an encoded moving image frame and encoding information representing an encoding method;
determining whether each macroblock of the frame to be processed has been encoded by a frame prediction or encoded by a field prediction;
decoding an encoded macroblock by a decoding method corresponding to an encoding method determined by determining; and
performing field prediction decoding to a macroblock of a second field within the same frame by using as one of reference images a macroblock of a first field within the same decoded frame, when the encoding method determined by determining is the field predictive encoding.
